# EUROPEAN PATENT APPLICATION

(11) **EP 2 375 742 A2**
(43) Date of publication of application: **12.10.2011**
(21) Application number: 11161401.2
(22) Date of filing: 06.04.2011
(51) Int. Cl.: H04N 7/15

(54) **Systems and methods to group and browse cameras in a large scale surveillance system**

(30) Priority: 09.04.2010 US 757306
(71) Applicant: Honeywell International Inc., Morristown, NJ 07962-2245 (US)
(72) Inventor: Subbian, Deepakumar, 560076, Bangalore, Karnataka (IN); Drive, Marine, 560076, Bangalore, Karnataka (IN); Jackson, Andrew, Las Vegas, NV 89131 (US)
(74) Representative: Buckley, Guy Julian

(57) **Abstract**

A system and method for grouping and browsing video data streams associated with cameras in a large scale surveillance system are provided. The method includes grouping a plurality of cameras associated with a surveillance system into a plurality of groups, selecting at least one group from the plurality of groups, displaying video data streams associated with a predetermined number of cameras in the selected group, and browsing through video data streams associated with all cameras in the selected group.

## Description

### FIELD OF INVENTION

The present invention relates generally to video management systems. More particularly, the present invention relates to systems and methods for grouping cameras in a large scale surveillance system and viewing and browsing video data streams associated with those cameras.

### BACKGROUND

Video management systems (VMS) known in the art include a plurality of cameras and a workstation. The cameras can be dispersed in a monitored area, and the workstation can display video data streams associated with the plurality of cameras. Each camera can monitor a particular zone in the monitored area, and security personnel or another user can view video data streams associated with each camera at the workstation.

In video management systems, each of the plurality of cameras is given a camera name and/or number and has a particular location. Often the number of cameras included in a video management system is so numerous that it is difficult, if not impossible, for an operator to remember the name and number of each camera and the location monitored by each camera. For example, in video management systems used in connection with large scale surveillance systems such as a housing authority, city wide surveillance, airport, or casino, the number of cameras can be in the thousands or tens of thousands.

Current solutions for accessing cameras in a large scale surveillance system include accessing a table or other cross-referencing device to determine the name, number, and/or location of a camera monitoring a particular zone. Other solutions include grouping cameras in logical groups or with surrounding cameras, for example.

However, all known solutions for accessing cameras in a large scale surveillance system must be explicitly configured by an end user. Further, the configuration must be continuously updated when, for example, a camera is added, deleted, or relocated in the surveillance system. This can be a tedious, time consuming, and error-prone task.

There is thus a continuing, ongoing need for systems and methods for grouping together cameras in a large scale surveillance system. Preferably, video data streams associated with each camera in a group of cameras can be easily viewed on a workstation so that a user can navigate between views of different monitored zones.

### BRIEF DESCRIPTION OF THE DRAWINGS

FIG. 1 is a flow diagram of a method for grouping cameras and browsing video data streams associated with cameras in a large scale surveillance system in accordance with the present invention;

FIG. 2 is a block diagram of a system for carrying out methods in accordance with the present invention;

FIG. 3 is an interactive window displayed on a viewing screen of a graphical user interface for grouping cameras in a large scale surveillance system in accordance with the present invention;

FIG. 4 is an interactive window displayed on a viewing screen of a graphical user interface for viewing video data streams associated with cameras in a large scale surveillance system in accordance with the present invention; and

FIG. 5 is an interactive window displayed on a viewing screen of a graphical user interface for browsing video data streams associated with cameras in a large scale surveillance system in accordance with the present invention.

### DESCRIPTION OF THE PREFERRED EMBODIMENTS

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments of the present invention include systems and methods for grouping together cameras in a large scale surveillance system. Preferably, video data streams associated with each camera in a group of cameras can be easily viewed on a workstation so that a user can navigate between views of different monitored zones.

Systems and methods in accordance with the present invention can include a workstation for displaying video data streams associated with cameras in a large scale surveillance system. The workstation in accordance with the present invention can include control circuitry, a programmable processor, and associated software, stored on a local computer readable medium, as would be understood by those of skill in the art.

In embodiments of the present invention, a user can engage an interactive viewing screen associated with the workstation to group together cameras in the surveillance system. For example, folders and sub-folders can be created. Cameras associated with the surveillance system can be grouped into these folders and sub-folders, for example, by dragging and dropping camera names into the appropriate folder.

In accordance with the present invention, cameras can be grouped visually. Thus, there is no need for explicit configuration using camera numbers. Further, when cameras are added, deleted, or relocated in the surveillance system the cameras can be re-grouped visually, which can be intuitive and time-saving for a user.

In further embodiments of the present invention, a user can engage the interactive viewing screen associated with the workstation to easily view and browse video data streams associated with cameras in the surveillance system. For example, a user can select a group of cameras for viewing, for example, by dragging and dropping the folder or sub-folder associated with the group into a viewing window of the workstation.

N number of cameras can be associated with a group G, and the viewing window of the workstation can include a predetermined number of sub-windows W. For example, in one embodiment of the present invention, N = 200 and W = 16. That is, a group G includes 200 cameras, and, at any given time, the viewing window of the workstation can display video data streams from sixteen cameras in the group G. When sixteen video data streams are being simultaneously displayed, the viewing window can arrange the sub-windows in an NxM array, for example, a 4x4 array, a 2x8 array, or a 1 x16 array.

When the group G is initially selected, the viewing window of the workstation can display video data streams associated with the first W cameras in the group G. In embodiments of the present invention, the user can engage the interactive viewing screen to browse through video data streams associated with all cameras in the group G. For example, the interactive viewing screen can include "Next" and "Previous" buttons and/or icons that can be selected to display the next or previous W video data streams associated with the next or previous W cameras in the group G. Thus, all video data streams associated with cameras in a particular group, folder, and/or sub-folder can be browsed intuitively, easily, and efficiently irrespective of the number of cameras in the system.

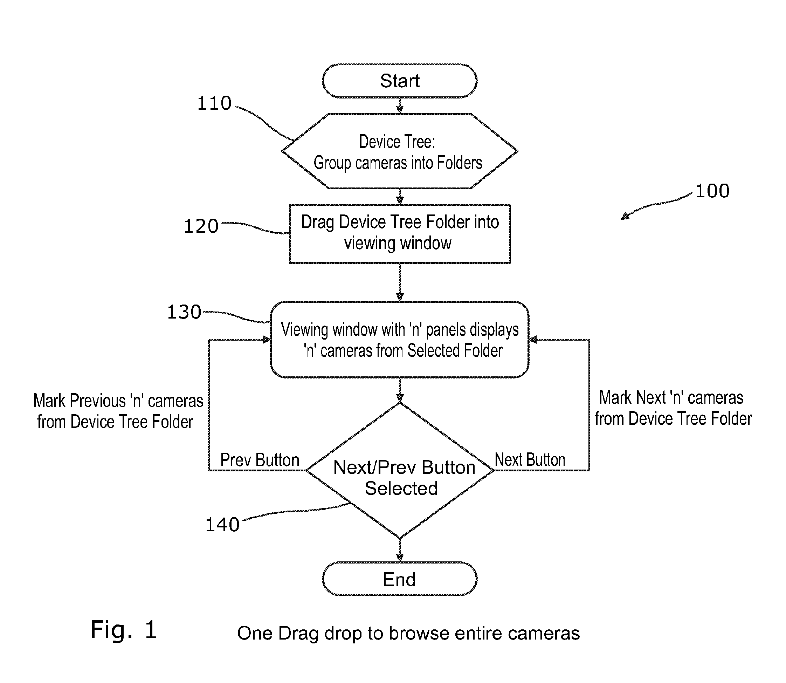

FIG. 1 is a flow diagram of a method 100 for grouping cameras and browsing video data streams associated with cameras in a large scale surveillance system in accordance with the present invention. In the method 100, cameras associated with a surveillance system can be grouped into folders as in 110. To view video data streams associated with cameras in a particular folder, the folder can be dragged and dropped into a viewing window as in 120.

A viewing window with N panels or sub-windows can display video data streams associated with N cameras in the selected folder as in 130. To browse through video data streams associated with all cameras in the selected folder, a "Next" and/or "Previous" button or icon can be selected as in 140. If a "Next" button is selected, the viewing window can display video data streams associated with the next N cameras in the selected folder. However, if a "Previous" button is selected, the viewing window can display video data streams associated with the previous N cameras in the selected folder.

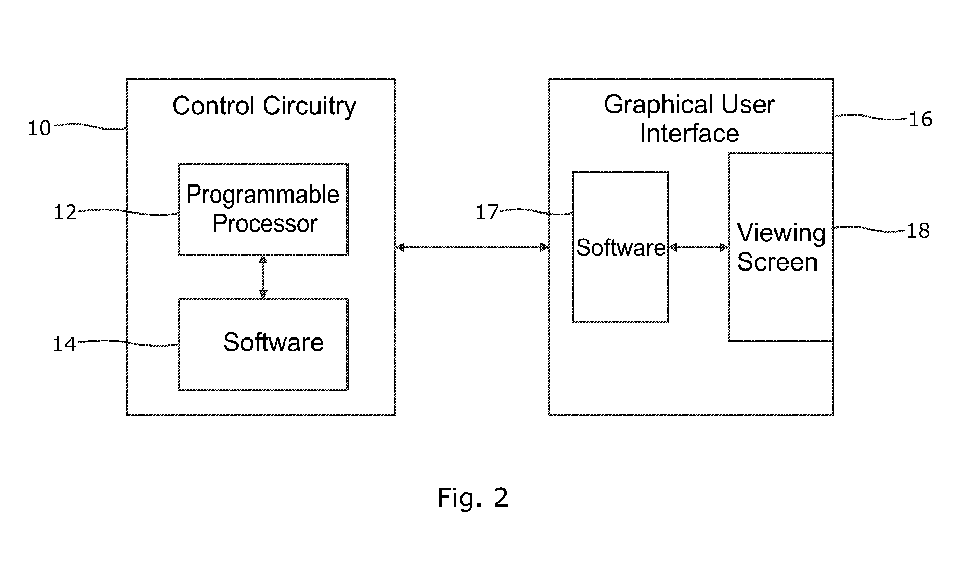

The method shown in FIG. 1 and others in accordance with the present invention can be implemented with a programmable processor and associated control circuitry. As seen in FIG. 2, control circuitry 10 can include a programmable processor 12 and software 14, stored on a local computer readable medium, as would be understood by those of skill in the art. Names, numbers, and/or location data for the plurality of cameras located in a monitored area can be input into the programmable processor and associated control circuitry.

An associated user interface 16 can be in communication with the processor 12 and circuitry 10. A viewing screen 18 of the user interface, as would be known by those of skill in the art, can display interactive and viewing windows. In some embodiments of the present invention, the user interface can be a multi-dimensional graphical user interface. In some embodiments of the present invention, the viewing screen 18 can display video from the cameras in the monitored area.

The interactive and viewing windows shown and described herein are exemplary only. Those of skill in the art will understand that the features of the windows shown and described herein may be displayed by additional or alternate windows.

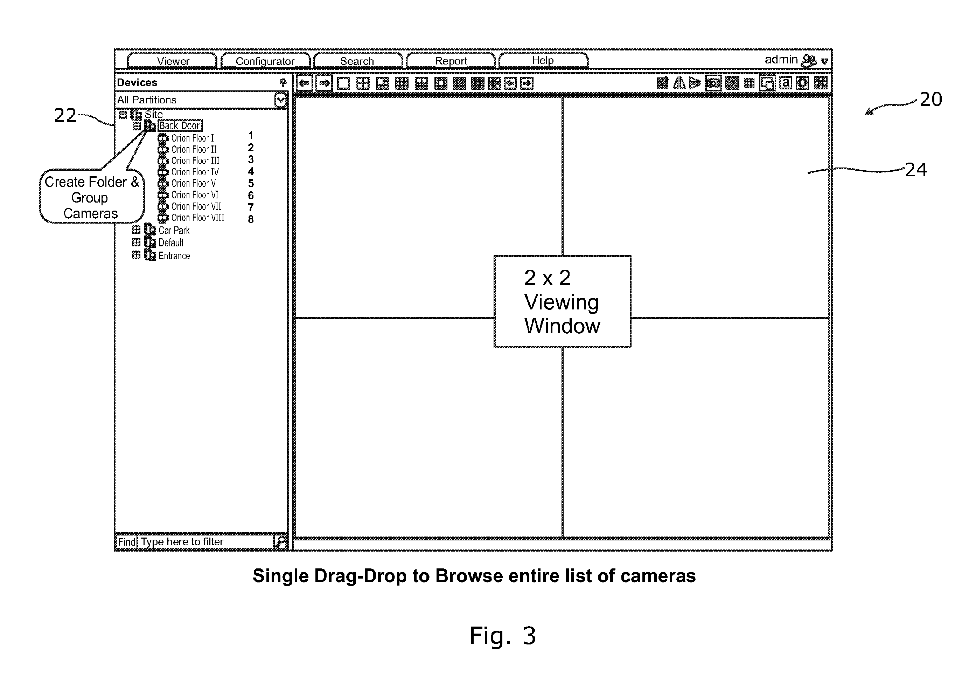

FIG. 3 is interactive window 20 displayed on a viewing screen of a graphical user interface for grouping cameras in a large scale surveillance system in accordance with the present invention. As seen in FIG. 3, the window 20 can include a left pane 22 and a right viewing pane 24. The left pane 22 can list folders and sub-folders for grouping cameras in the surveillance system.

For example, as seen in the left pane 22 of FIG. 3, the folders "Back Door," "Car Park," "Default," and "Entrance" are listed. The folders listed can include cameras monitoring a particular zone. For example, the "Back Door" folder can include cameras that monitor the area in and around the back door of a building.

Furthermore, each folder can include sub-folders. For example, the "Back Door" folder of FIG. 3 can include sub-folders "Orion Floor I," "Orion Floor II," "Orion Floor III," "Orion Floor IV," "Orion Floor V," "Orion Floor VI," "Orion Floor VII," and "Orion Floor VIII." Each sub-folder can include N number of cameras. For example, the right viewing pane 24 of the window 20 in FIG. 3 includes four panels or sub-windows for displaying video data streams associated with four different cameras. Thus, each sub-folder can include four cameras.

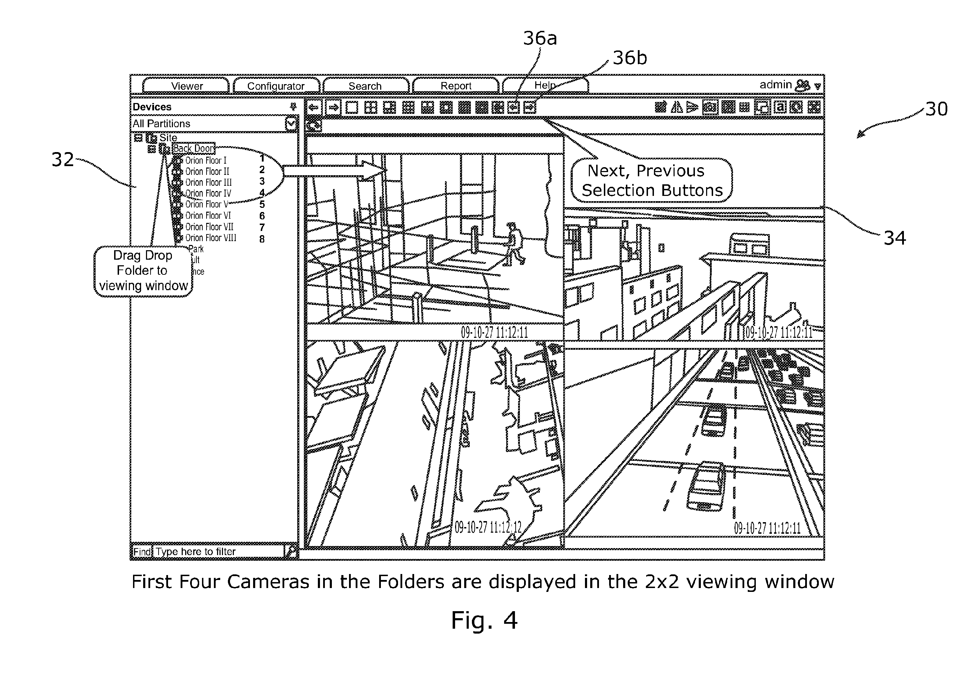

FIG. 4 is an interactive window 30 displayed on a viewing screen of a graphical user interface for viewing video data streams associated with cameras in a large scale surveillance system in accordance with the present invention. As seen in FIG. 4, the window 30 can include a left pane 32 and a right viewing pane 34.

To view video data streams associated with cameras in any particular folder or sub-folder, a user can select that folder or sub-folder. For example, a user can drag and drop the selected folder from the left pane 32 into the right viewing pane 34. As seen in FIG. 4, the right viewing window 34 includes four panels or sub-windows. Accordingly, when a folder from the left pane 32 is selected, the right viewing window can display video data streams from the first four cameras in the selected folder.

The right viewing pane 34 can also include first and second selection buttons or icons 36a, 36b. For example, the first selection button 36a can be a "Previous" button, and the second selection button 36b can be a "Next" button. The video data streams associated with cameras in the selected folder can be easily and efficiently browsed by engaging the first and second selection buttons 36a, 36b.

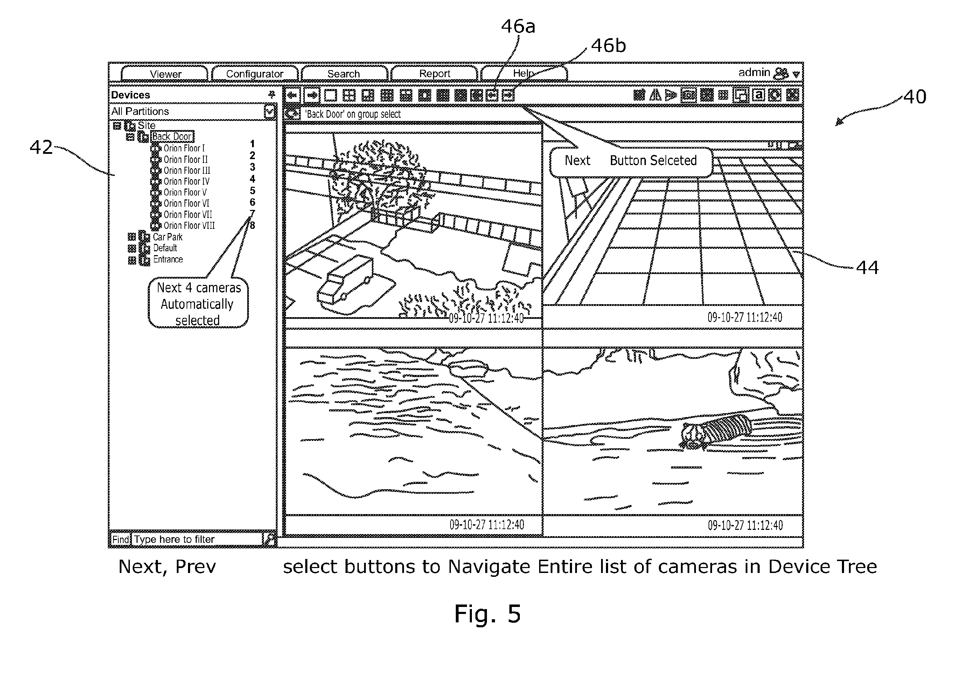

FIG. 5 is an interactive window 40 displayed on a viewing screen of a graphical user interface for browsing video data streams associated with cameras in a large scale surveillance system in accordance with the present invention. As seen in FIG. 5, when the first or second selection button 46a or 46b is selected, video data streams associated with the previous or next cameras in the selected folder can be displayed in the right viewing pane 44.

For example, the right viewing pane 44 of FIG. 5 can display video data streams associated with four cameras in the selected folder at any given time. To view video data streams from additional cameras in the selected folder, the first or second selection button 46a or 46b can be selected. If the first selection button 46a is selected, the right viewing pane 44 can display video data streams associated with the previous four cameras in the selected folder, and if the second selection button 46b is selected, the right viewing pane 44 can display video data streams associated with the next four cameras in the selected folder. Thus, all video data streams associated with cameras in the selected folder can be easily and efficiently browsed and viewed irrespective of the number of cameras in the system.

From the foregoing, it will be observed that numerous variations and modifications may be effected without departing from the spirit and scope of the invention. It is to be understood that no limitation with respect to the specific system or method illustrated herein is intended or should be inferred. It is, of course, intended to cover by the appended claims all such modifications as fall within the sprit and scope of the claims.

## Claims

1. A method comprising:
grouping a plurality of cameras associated with a surveillance system into a plurality of groups;
selecting at least one group from the plurality of groups;
displaying video data streams associated with a predetermined number of cameras in the selected group; and
browsing through video data streams associated with all cameras in the selected group.

2. The method of claim 1 wherein grouping the plurality of cameras includes grouping the plurality of cameras according to geographic location in a monitored area.

3. The method of claim 1 wherein grouping the plurality of cameras includes dragging and dropping camera names into a plurality of folders.

4. The method of claim 1 wherein selecting at least one group includes dragging and dropping a folder associated with the selected group into a viewing window.

5. The method of claim 1 wherein displaying video data streams associated with a predetermined number of cameras in the selected group includes displaying the video data streams in an NxM array of viewing sub-windows.

6. The method of claim 5 wherein the NxM array includes W viewing sub-windows.

7. The method of claim 6 wherein displaying video data streams associated with a predetermined number of cameras includes displaying video data streams associated with W cameras.

8. The method of claim 7 wherein browsing through video data streams associated with all cameras in the selected group includes displaying video data streams associated with W cameras at a time.

9. The method of claim 8 wherein first and second selection buttons are engaged for displaying video data streams associated with a different set of W cameras in the selected group.

10. The method of claim 9 wherein engaging the first selection button causes video data streams associated with the previous W cameras in the selected group to be displayed and wherein engaging the second selection button causes video data streams from the next W cameras in the selected group to be displayed.

11. An apparatus comprising:
circuitry that groups a plurality of cameras associated with a surveillance system into a plurality of groups;
circuitry that selects at least one group from the plurality of groups;
circuitry that displays video data streams associated with a predetermined number of cameras in the selected group; and
circuitry that browses through video data streams associated with all cameras in the selected group.

12. The apparatus of claim 11 wherein that circuitry that displays video data streams associated with a predetermined number of cameras in the selected group includes circuitry that displays the video data streams in an NxM array of viewing sub-windows.

13. The apparatus of claim 12 wherein the NxM array includes W viewing sub-windows.

14. The apparatus of claim 13 wherein the circuitry that displays video data streams associated with a predetermined number of cameras includes circuitry that displays video data streams associated with W cameras.

15. The apparatus of claim 14 wherein the circuitry that browses through video data streams associated with all cameras in the selected group includes circuitry that displays video data streams associated with W cameras at a time.
